# EUROPÄISCHE PATENTSCHRIFT

(11) **EP 1 479 552 B1**
(45) Veröffentlichungstag und Bekanntmachung des Hinweises auf die Patenterteilung: **19.07.2006**
(21) Anmeldenummer: 04011344.1
(22) Anmeldetag: 13.05.2004
(51) Int. Cl.: B60J 10/00, B23P 19/04

(54) **Andrückvorrichtung für Abdichtungsprofile bei Kraftfahrzeugkarosserien**
Tool for fitting channel shaped seals onto motor vehicle bodies
Outil pour presser des joints profilés sur des carrosseries de véhicules

(30) Priorität: 21.05.2003 DE 10322874
(43) Veröffentlichungstag der Anmeldung: 24.11.2004
(73) Patentinhaber: ADAM OPEL AG, 65423 Rüsselsheim (DE)
(72) Erfinder: Rösch, Karl-Josef, 55296 Gau-Bischofsheim (DE); Schad, Hans-Joachim, 65428 Rüsselsheim (DE); Schönfeld, Karl-Heinz, 98587 Bermbach (DE)

(56) Entgegenhaltungen:
- WO-A-00/18601
- GB-A- 2 324 327
- GB-A- 2 327 698

## Beschreibung

Die Erfindung betrifft eine Andrückvorrichtung zum Anbringen von Abdichtungsprofilen an Blechteile von Kraftfahrzeugkarosserien (siehe z.B., GB-2 327 698-A). Abdichtungsprofile werden häufig an Blechteile angebracht, die im Betrieb geoffnet oder geschlossen werden müssen. Beispielsweise ist dies bei Türrahmen der Fall, damit im Betrieb eines Kraftfahrzeugs kein Wasser durch den Turspalt ins Innere des Kraftfahrzeugs eindringt.

Solche Andrückvorrichtungen weisen eine häufig pneumatisch angetriebene Antriebswelle auf, an der eine Andrückrolle befestigt ist. Darüber hinaus ist eine Formrolle vorgesehen, die auf einer Sekundärwelle angeordnet ist. Zum Anbringen eines Abdichtungsprofils, das im Inne= ren einen Blechrand aufweist, wird dieses zunächst auf eine Kraftfahrzeugkarosseriekante aufgesetzt, und zwar entlang des Umfangs der Öffnung. Danach wird die Andrückvorrichtung auf das Abdichtungsprofil aufgesetzt. Die An= drückrolle und die Formrolle beginnen sich zu drehen und der Blechrand im Inneren des Abdichtungsprofils wird so verformt, dass sich eine feste reibschlüssige Verbindung zwischen dem Abdichtungsprofil und dem Blechteil ergibt.

Bei dem im Stand der Technik bekannten Verfahren ist von Nachteil, dass ein höher Aufwand bei der Endkontrolle betrieben werden muss, um undichte Karosseriespalte zu entdecken.

Die Erfindung geht von der Aufgabe aus, ein Verfahren und eine Vorrichtung zum Anbringen von Dichtmitteln an Blechteilen von Kraftfahrzeugkarosserien bereitzustellen, mit denen eine hohe Zuverlässigkeit erreicht wird, so dass die Qualitätssicherung weniger aufwendig gestaltet werden kann.

Diese Aufgabe wird durch die Vorrichtung nach Anspruch 1 gelöst. Vorteilhafte Weiterbildungen ergeben sich aus den jeweiligen abhängigen Patentansprüchen.

Gemäß einem der Grundgedanken der Erfindung sind die Antriebswelle und die Sekundärwelle um eine Schwenkachse zueinander verschwenkbar angeordnet. Gerade mit einer solchen Ausbildung der erfindungsgemäßen Andruckvorrichtung lässt sich eine zuverlässige Befestigung von Abdichtungsprofilen erreichen. Vor dem Anpressen wird nämlich die Andrückrolle von der Formrolle weggeschwenkt und die Andrückvorrichtung auf das Abdichtungsprofil aufgesetzt. Dadurch werden Beschädigungen des Abdichtungsprofils beim Aufsetzen der erfindungsgemäßen Andrückvorrichtung vermieden.

Dabei kann das Verschwenken um eine Richtung senkrecht zu den Drehachsen von Antriebswelle und Sekundärwelle erfolgen. Dadurch wird eine besonders einfache Ausgestaltung der erfindungsgemäßen Andrückvorrichtung gewährleistet. Abweichend davon kann das Verschwenken auch um eine andere Schwenkachse herum erfolgen.

Besonders vorteilhaft ist es dabei, wenn eine pneumatische Andrückvorrichtung vorgesehen ist, die die Andrückrolle und die Formrolle in Richtung aufeinander drückt. Durch das Verwenden einer pneumatischen Andrückvorrichtung wird gegenüber beispielsweise einer Federkraftbetätigten Andrückvorrichtung eine gleiche Anpresskraft für alle Flanschbereiche und alle Kantenbereiche eines Kraftfahrzeugs erreicht. Dabei ist es unerheblich, wie dick das Blechteil ist, auf das ein Abdichtungsprofil aufgesetzt wird. Unabhängig vom Abstand der Formrolle und der Andrückrolle voneinander wird stets im Wesentlichen dieselbe Anpresskraft ausgeübt. Dadurch wird eine Beschädigung von Abdichtungsprofilen infolge zu hoher Anpress:= kräfte in Bereichen mit erhöhten Flanschdicken vermieden. Es gibt keine Beschädigung der Abdichtung beim Ansetzen und beim Ausfahren des erfindungsgemäßen Andrückgeräts bzw. Rollforming-Geräts. Lastspitzen werden dabei vermieden. Es gibt außerdem ergonomische Vorteile durch ein gegenüber dem Stand der Technik leichteres, vereinfachtes und ruckfreies Werkzeughandling.

In einer Weiterbildung der Erfindung ist vorgesehen, dass die Antriebswelle die Sekundärwelle dreht, und zwar insbesondere über eine Getriebestufe, über die die Antriebswelle und die Sekundärwelle miteinander in Eingriff stehen. Diese Getriebestufe kann ein Antriebszahnrad auf der Antriebswelle und ein Sekundärzahnrad auf der Sekundärwelle aufweisen, wobei die Schwenkachse vorzugsweise durch einen Bereich verläuft, in dem der Teilkreis des Antriebszahnrads und der Teilkreis des Sekundärzahnrads verläuft. Wenn dann die Verzahnung auf ein Verschwenken von Antriebszahnrad und Sekundärzahnrad zueinander angepasst ist, dann ergibt sich ein besonders guter und störungsfreier Betrieb.

Wenn die Antriebswelle in einem Antriebswellengehause angeordnet ist und wenn die Sekundärwelle in einem Sekundärwellengehäuse angeordnet ist, dann lässt sich die Beaufschlagung mit pneumatischem Druck besonders einfach bewerkstelligen, wenn die pneumatische Andrückvorrichtung einen verschieblich angeordneten Kolben im Antriebswellengehäuse oder im SekundärwellengehAuse aufweist, wobei die Vorderseite des Kolbens das jeweils andere Gehäuse, also das Sekundarwellengehäuse bzw. das Antriebswellengehause beaufschlagt.

Die Druckluftzufuhr zum Kolben kann mit der Druckluftzufuhr für einen Antrieb der Antriebswelle in Verbindung stehen, wobei Vorteilhafterweise ein manuell betätigbares Ventil zur Unterbrechung der Druckluftzufuhr zum Kolben vorgesehen ist. Dann kann eine Rückstellfeder die Andrückrolle und die Formrolle in Richtung voneinander wegdrücken, wobei dies besonders einfach dann erfolgen kann, wenn das betätigbare Ventil eine Entlüftung für die Druckluftzufuhr zum Kolben aufweist.

Die Erfindung ist in der Zeichnung anhand eines Ausführungsbeispiels näher veranschaulicht.
- Figur 1: zeigt einen Querschnitt durch einen Teilbereich einer erfindungsgemäßen Andrückvorrichtung,
- Figur 2: zeigt eine Außenansicht eines Teilbereichs der erfindungsgemäßen AndruckVorrichtung aus Figur 1,
- Figur 3: zeigt eine Gesamtansicht der erfindungsgemäßen Andrückvorrichtung gemäß Figur 1 und Figur 2,
- Figur 4: zeigt einen Querschnitt durch einen Blechteilabschnitt mit einem aufgesetzten Abdichtungsprofil,
- Figur 5: zeigt den Blechteilabschnitt aus Figur 4 zusammen mit dem Abdichtungsprofil sowie mit einem Teilbereich einer erfindungsgemäßen Andrückvorrichtung und
- Figur 6: zeigt das fertig gestellte und ängedrücke Abdichtungspröfil aus Figur 4.

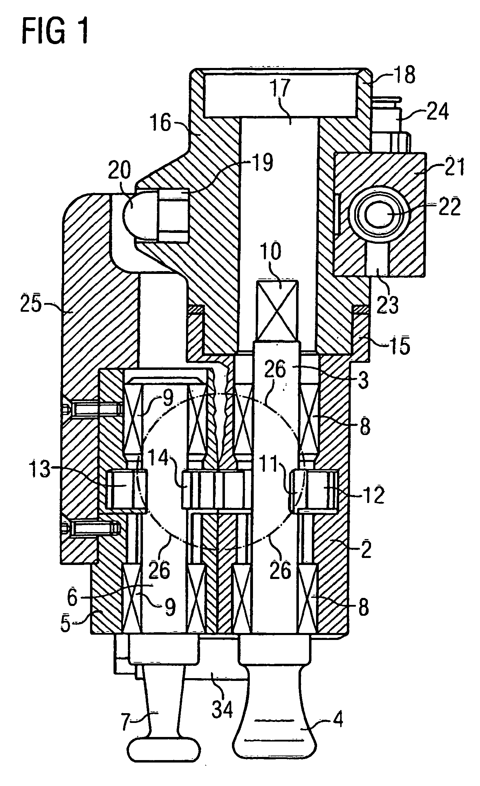

Die Figuren 1 bis 3 zeigen eine erfindungsgemäße Andrückvorrichtung 1 in verschiedenen Darstellungen und Ansichten.

Wie man besonders gut in Figur 1 sieht, gliedert sich die Andrückvorrichtung 1 in ein Antriebswellengehäuse 2, in dem eine Antriebswelle 3 mit einer Andrückrolle 4 aufgenommen ist, sowie in ein Sekundärwellengehäuse 5, in dem eine Sekundärwelle 6 mit einer Formrolle 7 aufgenommen ist. Dabei ist die Antriebswelle 3 in Antriebswellenlagern 8 gelagert und die Sekundärwelle 6 ist in Sekundärwellenlagern 9 gelagert.

Die Antriebswelle 3 weist an ihrem in Figur 1 oben gelegenen Ende einen Antriebsvierkant 10 zum Eingriff mit einem in dieser Ansicht nicht gezeigten Pneumatikmotor auf. Im Bereich zwischen den Antriebswellenlagern 8 ist über eine Keilverbindung 11 ein Antriebszahnrad 12 vorgesehen.

Das Antriebszahnrad 12 steht mit einem Sekundärzahnrad 13 in Eingriff, das über eine weitere Keilverbindung 14 auf der Sekundärwelle 6 befestigt ist. Bei einer Drehung der Antriebswelle 3 dreht sich die Sekundärwelle 6 in gleichem Maße mit.

An der Oberseite des Antriebswellengehäuses 2 ist dieses zu einem Aufnahmeflänsch 15 verbreitert ausgebildet. Im Aufnahmeflansch 15 ist ein Druckkolbengehäuse 16 äufgenommen, das eine Durchgangsbohrung 17 sowie obenseitig einen Aufnahmeflansch 18 aufweist, der von seinen Abmessungen her mit dem Aufnahmeflansch 15 übereinstimmt.

Das Druckkolbengehäuse weist in der in Figur 1 linksseitig gelegenen Hälfte eine Druckzylinderbohrung 19 auf, in der ein Druckkolben 20 längs verschieblich aufgenommen ist. Der Druckkolben 20 ist über eine in Figur 1 rechtsseitig an Druckkolbengehäuse 16 angeordnete Druckventilanordnung 21 betätigbär. Dabei weist die Druckventilenordnung 21 einen manuellen Betätigungsknopf 22 sowie eine Entlüftungsleitung 23 auf. Obenseitig ist, ein Druckluftanschluss 24 vorgesehen. ,

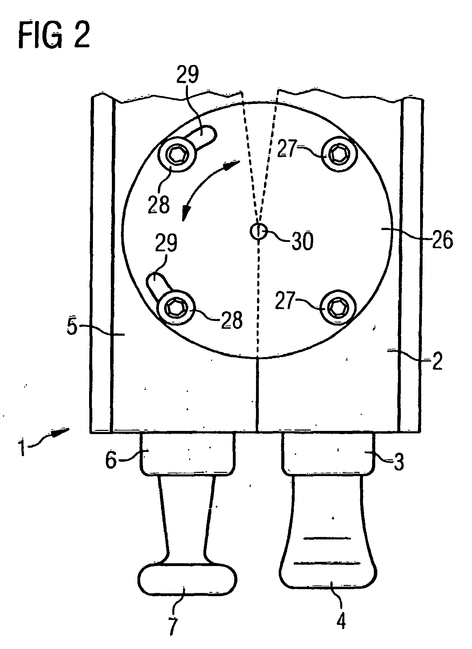

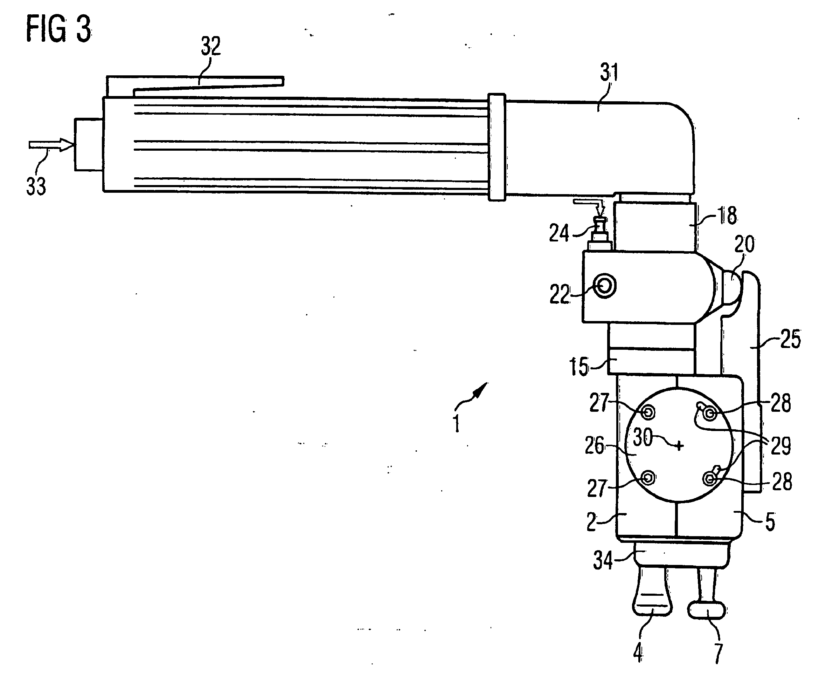

Am Sekundärwellengehäuse 5 erstreckt sich ein Betätigungshebel 25 nach oben bis in den Bereich des Drukkolbens 20. Wie man besonders in Figur 2 und in Figur 3 sieht, ist an beiden Seiten des Antriebswellengehäuses 2 und des Sekundärwellengehäuses 5 eine Gelenkscheibe 26 angebracht. Die Gelenkscheibe 26 ist dabei mit zwei Halteschrauben 27 am Antriebswellengehäuse 2 befestigt. Am Sekundärwellengehäuse 5 sind zwei Verschiebeschrauben 28 eingeschraubt. Entsprechende Langlöcher 29 gewährleisten eine Verschiebung der Verschiebeschrauben 28 in der Ge= lenkscheibe 26. Durch diese Verschiebung wird ein Verschwenken des Sekundärwellengehäuses 5 bezüglich des An= triebswellengehäuses 2 gewährleistet, und zwar um eine Drehachse 30 herum. Dabei ist durch die Ausbildung der Andrückvorrichtung 1 gewährleistet, dass der Teilkreis des Antriebszahnrads 12 und des Sekundärzahnrads 13 im Bereich der Drehachse 30 verläuft.

Figur 3 zeigt die Andrückvorrichtung 1 mit eingesetztem Pneumatikmotor 31. Der Pneumatikmotor 31 hat einen Betätigungshebel 32, der die Zufuhr von Druckluft durch einen zentralen Druckluftanschluss 33 bestimmt. In einer hier nicht gezeigten Vorrichtung wird Druckluft abzweigend vom Druckluftanschluss 33 dem Druckluftanschluss 24 zuge= führt.

Wie man weiterhin in Figur 3 besonders gut sieht, sind untenseitig am Antriebswellengehäuse 2 und am Sekundärwellengehäuse 5 zwei Querrollen 34 angebracht, von denen der besseren Darstellung wegen nur eine Querrolle 34 eingezeichnet ist. Außerdem ist im Bereich der Querrollen 34 innenseitig im Antriebswellengehäuse 2 und im Sekundärwellengehäuse 5 eine in dieser Ansicht nicht gezeigte Spreizfeder vorgesehen, die das Antriebswellengehäuse 2 und das Sekundärwellengehäuse 5 untenseitig auseinander drückt.

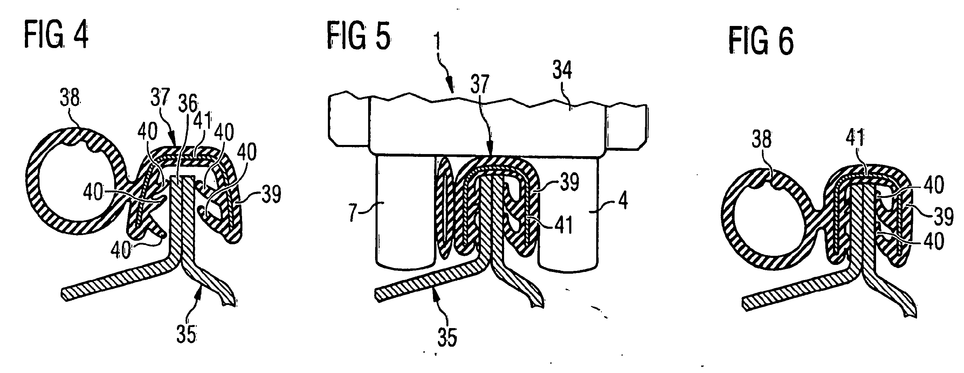

In Figur 4 ist ein Abschnitt einer Karosserie 35 gezeigt, an dem eine Blechkante 36 ausgeformt ist.

Auf die Blechkante 36 ist ein Abdichtungsprofil 37 aufgesetzt, das sich in einen Dichtschlauch 38, in einen Haltebereich 39 mit U-förmigem Querschnitt und innen liegenden Greiflippen 40 gliedert. Im Inneren des Haltebereichs 39 ist ein Blechband 41 mit U-förmigem Querschnitt eingegössen.

Figur 5 zeigt den Karosserieabschnitt 35 aus Figur 4 mit aufgesetzter Andrückvorrichtung 1, von der in dieser An= sicht nur die Formrolle 7, die Andrückrolle 4 und die Querrolle 34 teilweise zu sehen ist. Die Darstellung ist sehr schematisch. Wie man in dieser Darstellung gut sieht, wird das Abdichtungsprofil von der Andrückvorrichtung 1 zusammengepresst, so dass sich das Blechband 41 verformt. Dadurch treten die Greiflippen 40 in festen Eingriff mit der Blechkante 36, wodurch eine zuverlässige und gute Verbindung erreicht wird. Die erfindungsgemäße Andrückvorrichtung 1 vermeidet dabei Beschädigungen des Dichtschlauchs 38, wodurch sich später eine gute Dichtheit ergibt.

### Bezugszeichenliste

- 1: Andrückvorrichtung
- 2: Antriebswellengehäuse
- 3: Antriebswelle
- 4: Andrückrolle
- 5: Sekundärwellengehäuse
- 6: Sekundärwelle
- 7: Formrolle
- 8: Antriebswellenlager
- 9: Sekundärwellenlager
- 10: Antriebsvierkant
- 11: Keilverbindung
- 12: Antriebszahnrad
- 13: Sekundärzahnrad
- 14: Keilverbindung
- 15: Aufnahmeflansch
- 16: Druckkolbengehäuse
- 17: Durchgangsbohrung
- 18: Aufnahmeflansch
- 19: Druckzylinderbohrung
- 20: Druckkolben
- 21: Druckventilanordnung
- 22: Betätigungsknopf
- 23: Entlüftungsleitung
- 24: Druckluftanschluss
- 25: Betätigungshebel
- 26: Gelenkscheibe
- 27: Halteschraube
- 28: Verschiebeschraube
- 29: Langloch
- 30: Drehachse
- 31: Pneumatikmotor
- 32: Betätigungshebel
- 33: Druckluftanschluss
- 34: Querrolle
- 35: Karosserie
- 36: Blechkante
- 37: Abdichtungsprofil
- 38: Dichtschlauch
- 39: Haltebereich
- 40: Greiflippe
- 41: Blechband

## Patentansprüche

1. Andrückvorrichtung (1) zum Anbringen von Abdichtungspröfilen (37) insbesondere an Blechteile von Kraftfahrzeugkarosserien, mit einer über eine pneumatisch angetriebene Antriebswelle (3) angetriebenen Andrückrolle (4) und mit einer über eine Sekundärwelle (6) angetriebenen Formrolle (7), **dadurch gekennzeichnet, dass** Antriebswelle (3) und Sekundärwelle (6) um eine Schwenkachse (30) zueinander verschwenkbar angeordnet sind, wobei eine pneumatische Andrückvorrichtung (20) vorgesehen ist, die die Andrückrolle (4) und die Formrolle (7) aufeinander drückt.

2. Andrückvorrichtung nach Anspruch 1, **dadurch gekennzeichnet, dass** die Antriebswelle (3) und die Sekundärwelle (6) über eine Getriebestufe (12, 13) miteinander in Eingriff stehen.

3. Andrückvorrichtung nach Anspruch 2, **dadurch gekennzeichnet, dass** die Getriebestufe ein Antriebszahnrad (12) auf der Antriebswelle (3) und ein Sekundärzähnrad (13) auf der Sekundärwelle (6) aufweist.

4. Andrückvorrichtung nach Anspruch 3, **dadurch gekennzeichnet, dass** die Schwenkachse (30) durch einen Bereich verläuft, in dem der Teilkreis des Antriebszahnrads (12) und der Teilkreis des Sekundärzahnrads (13) verläuft.

5. Andrückvorrichtung nach einem der vorhergehenden Ansprüche, **dadurch gekennzeichnet, dass** die Antriebswelle (3) in einem Antriebswellengehause (2) angeordnet ist und dass die Sekundärwelle (6) in einem Sekundärwellengehäuse (5) angeordnet ist, wobei die pneumatische Andrückvorrichtung einen im Antriebswelieügeliäüse (2) verschieblich angeordneten Kolben (20) aufweist, der mit seiner Vorderseite das sekundärwellengehäuse (5) beaufschlagt.

6. Andrückvorrichtung nach Anspruch 5, **dadurch gekennzeichnet, dass** die Druckluftzufuhr zum Kolben (20) mit der Druckluftzufuhr (33) für einen Antrieb (31) der Antriebswelle (3) in Verbindung steht.

7. Andrückvorrichtung nach Anspruch 5 oder Anspruch 6, **dadurch gekennzeichnet, dass** zur Unterbrechung der Druckluftzufuhr zum Kolben (20) ein manuell betätigbares Ventil (22) vorgesehen ist.

8. Andrückvorrichtung nach Anspruch 7, **dadurch gekennzeichnet, dass** das Ventil (22) eine Entlüftung (23) für die Druckluftzufuhr zum Kolben (20) aufweist.

9. Andrückvorrichtung nach einem der Ansprüche 5 bis 8, **dadurch gekennzeichnet, dass** im Bereich zwischen Antriebswellengehäuse (2) und Sekundärwellengehäuse (5) eine Rückstellfeder vorgesehen ist, die die Andrückrolle (4) und die Formrolle (7) voneinander weg drückt.

## Claims

1. Press-on device (1) for fitting sealing profiles (37) in particular onto sheet-metal parts of motor vehicle bodies, having a pressing roller (4), which is driven by a pneumatically operated drive shaft (3), and having a moulding roller (7) driven via a secondary shaft (6), **characterized in that** drive shaft (3) and secondary shaft (6) are arranged pivotably relative to one another about a pivotal axis (30), wherein a pneumatic press-on device (20) is provided, which presses the pressing roller (4) and the moulding roller (7) towards one another.

2. Press-on device according to claim 1, **characterized in that** the drive shaft (3) and the secondary shaft (6) are in mutual engagement via a gear stage (12, 13).

3. Press-on device according to claim 2, **characterized in that** the gear stage comprises a driving gearwheel (12) on the drive shaft (3) and a secondary gearwheel (13) on the secondary shaft (6).

4. Press-on device according to claim 3, **characterized in that** the pivotal axis (30) extends through a region, in which the pitch circle of the driving gearwheel (12) and the pitch circle of the secondary gearwheel (13) extends.

5. Press-on device according to one of the preceding claims, **characterized in that** the drive shaft (3) is disposed in a drive shaft housing (2) and that the secondary shaft (6) is disposed in a secondary shaft housing (5), wherein the pneumatic press-on device comprises a piston (20), which is disposed displaceably in the drive shaft housing (2) and acts with its front end upon the second shaft housing (5).

6. Press-on device according to claim 5, **characterized in that** the compressed-air supply to the piston (20) is connected to the compressed-air supply (33) for a drive (31) of the drive shaft (3).

7. Press-on device according to claim 5 or claim 6, **characterized in that** for interrupting the compressed-air supply to the piston (20) a manually actuable valve (22) is provided.

8. Press-on device according to claim 7, **characterized in that** the valve (22) comprises a vent (23) for the compressed-air supply to the piston (20).

9. Press-on device according to one of claims 5 to 8, **characterized in that** in the region between drive shaft housing (2) and secondary shaft housing (5) a resetting spring is provided, which presses the pressing roller (4) and the moulding roller (7) away from one another.

## Revendications

1. Dispositif de pression (1) destiné à poser des joints profilés (37) en particulier sur des pièces en tôle des carrosseries automobiles, comportant un galet presseur (4), actionné par un arbre d'entraînement (3) actionné par voie pneumatique, et un galet de formage (7), actionné par un arbre secondaire (6), **caractérisé en ce que** l'arbre d'entraînement (3) et l'arbre secondaire (6) sont agencés de manière à pouvoir pivoter l'un par rapport à l'autre autour d'un axe de pivotement (30), un dispositif de pression pneumatique (20) étant prévu pour pousser le galet presseur (4) et le galet de formage (7) l'un contre l'autre.

2. Dispositif de pression selon la revendication 1, **caractérisé en ce que** l'arbre d'entraînement (3) et l'arbre secondaire (6) sont en prise l'un avec l'autre par l'intermédiaire d'un palier de transmission (12, 13).

3. Dispositif de pression selon la revendication 2, **caractérisé en ce que** le palier de transmission comporte une roue dentée d'entraînement (12) sur l'arbre d'entraînement (3) et une roue dentée secondaire (13) sur l'arbre secondaire (6).

4. Dispositif de pression selon la revendication 3, **caractérisé en ce que** l'axe de pivotement (30) passe à travers une zone, dans laquelle passent le cercle partiel de la roue dentée d'entraînement (12) et le cercle partiel de la roue dentée secondaire (13).

5. Dispositif de pression selon l'une quelconque des revendications précédentes, **caractérisé en ce que** l'arbre d'entraînement (3) est agencé dans un boîtier d'arbre d'entraînement (2) et **en ce que** l'arbre secondaire (6) est agencé dans un boîtier d'arbre secondaire (5), le dispositif de pression pneumatique comportant un piston (20), qui est monté mobile dans le boîtier d'arbre d'entraînement (2) et qui, avec sa face avant, sollicite le boîtier d'arbre secondaire (5).

6. Dispositif de pression selon la revendication 5, **caractérisé en ce que** l'admission d'air comprimé vers le piston (20) communique avec l'admission d'air comprimé (33) pour un système d'entraînement (31) de l'arbre d'entraînement (3).

7. Dispositif de pression selon la revendication 5 ou 6, **caractérisé en ce qu'**il est prévu une valve (22), propre à être actionnée manuellement, pour interrompre l'admission d'air comprimé vers le piston (20).

8. Dispositif de pression selon la revendication 7, **caractérisé en ce que** la valve (22) comporte une purge d'air (23) pour l'admission d'air comprimé vers le piston (20).

9. Dispositif de pression selon l'une quelconque des revendications 5 à 8, **caractérisé en ce que**, dans la zone entre le boîtier d'arbre d'entraînement (2) et le boîtier d'arbre secondaire (5), il est prévu un ressort de rappel, par lequel le galet presseur (4) et le galet de formage (7) sont poussés pour s'écarter l'un de l'autre.
